# EUROPÄISCHE PATENTSCHRIFT

(11) **EP 3 077 689 B1**
(45) Veröffentlichungstag und Bekanntmachung des Hinweises auf die Patenterteilung: **18.09.2019**
(21) Anmeldenummer: 14820737.6
(22) Anmeldetag: 28.11.2014
(51) Int. Cl.: F16D 13/58

(54) **RÜCKSYSTEM FÜR EINE REIBKUPPLUNG**
ENGAGING/RELEASING SYSTEM FOR A FRICTION CLUTCH
SYSTÈME DE COMMANDE POUR UN EMBRAYAGE À FRICTION

(30) Priorität: 06.12.2013 DE 102013225125
(43) Veröffentlichungstag der Anmeldung: 12.10.2016
(73) Patentinhaber: Schaeffler Technologies AG & Co. KG, 91074 Herzogenaurach (DE)
(72) Erfinder: GMEINER, Timm, 77797 Ohlsbach (DE); DOLLANSKY, Johannes, 77830 Bühlertal (DE); HELMER, Daniel, 77883 Ottenhöfen (DE); SCHNEIDER, Michael, 76534 Baden-Baden (DE)
(86) Internationale Anmeldenummer: PCT/DE2014/200665
(87) Internationale Veröffentlichungsnummer: WO 2015/081949

(56) Entgegenhaltungen:
- DE-A1- 4 132 349
- DE-A1-102012 219 711
- DE-B3- 19 880 946
- JP-A- 2006 132 664

## Beschreibung

Die Erfindung betrifft ein Rücksystem für eine Reibkupplung gemäß dem Oberbegriff des Patentanspruchs 1, sowie eine Reibkupplung, insbesondere für ein Kraftfahrzeug.

Im Stand der Technik sind Reibkupplungen bekannt, bei denen eine Tellerfeder für die notwendige Anpresskraft zwischen Reibelementen sorgt, so dass ein ausreichendes Drehmoment über die Reibelemente übertragbar ist. Mit der zunehmenden Größe des erforderlichen Drehmoments steigen die Anforderungen an eine solche Tellerfeder. Das bedeutet, dass die Reibelemente mit einer größeren Kraft gegeneinander gepresst werden müssen. Dies hat zur Folge, dass die Betätigung der Tellerfeder für den Benutzer der Reibkupplung schwieriger oder zumindest unangenehmer wird, weil die Ausrückkraft höher ist. Darüber hinaus sind bei großen zu übertragenden Drehmomenten die auf die Reibelemente der Reibkupplung einwirkenden Kräfte im Übergangsbereich von einem ausgerückten Zustand in den vollständig eingerückten Zustand (Betriebspunkt der Reibkupplung) deutlich größer. Zur Lösung dieses Problems sind verschiedene Konstruktionen bekannt, die jedoch keine zufriedenstellende Lösung bereitstellen können.

Aus der DE 10 2012 219 711 A1 ist ein Rücksystem für eine Reibungskupplung bekannt, das auf den Oberbegriff des Patentanspruchs 1 lesbar ist.

Der vorliegenden Erfindung liegt die Aufgabe zugrunde, die aus dem Stand der Technik bekannten Nachteile zumindest teilweise zu überwinden.

Die Aufgabe wird durch die Merkmale der unabhängigen Patentansprüche gelöst. Vorteilhafte Weiterbildungen sind Gegenstand der abhängigen Patentansprüche.

Die Erfindung betrifft ein Rücksystem für eine Reibkupplung, welches zumindest die folgenden Komponenten aufweist:
- eine Einrückfeder zum Erzeugen einer Einrückkraft auf ein Reibpaket einer Reibkupplung; und
- eine Stützfeder zum Stützen der Einrückfeder an einer Hebelauflage,
wobei die Einrückfeder entlang eines Ausrückwegs auslenkbar ist,
dadurch gekennzeichnet, dass
weiterhin eine Kompensationsfeder vorgesehen ist, die eine der Einrückkraft entgegen gerichtete Kompensationskraft auf die Einrückfeder ausübt, wobei die Kompensationsfeder derart eingerichtet ist, dass die Kompensationskraft am Beginn des Ausrückwegs ansteigt.

Das Rücksystem ist dafür vorgesehen, die Reibelemente einer Reibkupplung gegeneinander zu pressen beziehungsweise die Kraft auch wieder zu lösen. Hierzu ist maßgeblich eine Einrückfeder vorgesehen, die zum Beispiel in Form einer Tellerfeder ausgeführt ist. Diese stützt sich an einem festen Bauteil der Reibkupplung ab und erzeugt eine Einrückkraft auf ein Reibpaket, damit das Reibpaket ein vorgegebenes Drehmoment übertragen kann. Weiterhin ist eine Stützfeder vorgesehen, welche die Einrückfeder in Bereich einer Hebelauflage stützt. Von einem Normalzustand, in dem das Reibpaket verpresst ist, ist die Einrückfeder mit Hilfe einer Betätigungseinrichtung auslenkbar, so dass das Reibpaket ausgerückt wird. Hierbei ist nun vorgeschlagen, eine Kompensationsfeder vorzusehen, welche der Einrückfeder entgegenwirkt. Hierbei ist die Kompensationsfeder derart eingerichtet, dass die Kompensationskraft über den Ausrückweg der Einrückfeder ansteigt. Somit ist im Zustand des eingerückten Zustands die Kompensationskraft relativ gering und verringert somit die Einrückkraft nicht oder zumindest nicht zu stark. Gleichzeitig wird aber mit zunehmendem Ausrückweg die Kompensationskraft größer, so dass ein Ausrücken durch die Federkraft der Kompensationsfeder unterstützt wird.

Es ist weiterhin eine Haltefeder vorgesehen, die derart eingerichtet ist, dass die Kompensationsfeder ab einem vorbestimmten Ausrückwegspunkt gegen die Haltefeder wirkt und bei diesem Ausrückwegspunkt die Kompensationskraft auf die Einrückfeder verringert ist.

Die Haltefeder ist dazu vorgesehen, einen besseren Übergang im Endbereich des Ausrückwegs zu erzeugen, indem die abnehmende Kraft der Einrückfeder, welche bevorzugt als Tellerfeder ausgeführt ist, von der Überlagerung der Kompensationskraft wieder zu entkoppeln, weil sich hierdurch ein angenehmeres Schaltverhalten für den Benutzer ergibt. Die Haltefeder kann zu diesem Zweck zum Beispiel Fangarme aufweisen, welche die Kompensationsfeder ab einen vorbestimmten Ausrückweg abfängt und somit die Kompensationskraft durch die Haltekraft kompensiert.

Gemäß einer weiteren vorteilhaften Ausführungsform des Rücksystems ist die Haltefeder einstückig mit der Stützfeder gebildet.

Die Stützfeder erstreckt sich im Stand der Technik von einem Halteelement bis zu einem Hebelpunkt der Einrückfeder und endet dort. Hierbei wird vorgeschlagen, die Stützfeder durch ein weiteres Federelement zu verlängern, welches die Haltefeder bildet.

Gemäß einer weiteren vorteilhaften Ausführungsform des Rücksystems weist die Kompensationsfeder eine Mehrzahl von Federzungentypen auf, die sich in Steifigkeit, Anzahl und/oder Krafteinleitungspunkt voneinander unterscheiden.

Bei dieser vorteilhaften Ausführungsform weist die Kompensationsfeder eine Mehrzahl von Federzungen auf, die wiederum in eine Mehrzahl von Federzungentypen untergliedert sind. Ein jeweiliger Federzungentyp weist dabei entweder eine besondere Steifigkeit, oder Anzahl oder einen besonderen Krafteinleitungspunkt auf, der ihn von den anderen Federzungentypen unterscheidet. Insbesondere ist bei den Federzungentypen das Minimum und Maximum der Federkraft unterschiedlich. Hierdurch wird ein weicherer Übergang in der Überlagerung der Kompensationsfederkennlinie und der Einrückfederlinie erreicht, so dass kein übermäßig großer Knick in der Federkennlinie entsteht.

Gemäß einer weiteren vorteilhaften Ausführungsform des Rücksystems sind die Federzungentypen derart eingerichtet, dass die Abnahme der Kompensationskraft am Ende des Ausrückwegs gegenüber der Zunahme am Beginn des Ausrückwegs verzögert ist.

Insbesondere Blattfedern, zu denen die Federzungen zählen, weisen eine im Wesentlichen symmetrische Zunahme und Abnahme der Kraft auf. Durch die Wahl verschiedener Federzungentypen kann die Kompensationskraftkennlinie derart verändert werden, dass die Symmetrie am Ende des Ausrückwegs verändert wird, so dass insgesamt eine sanftere überlagerte Einrückkraft-/ Kompensationskraftkennlinie entsteht.

Gemäß einer weiteren vorteilhaften Ausführungsform des Rücksystems sind die Federzungentypen derart eingerichtet, dass die Federzungentypen beim Ausrückwegsverlauf nacheinander einen Minimalbereich ihrer jeweiligen Kompensationskraftanteile erreichen und bis zum Ende des Ausrückwegs beim Minimalbereich bleiben.

Bei dieser bevorzugten Ausführungsform sind die Federzungentypen derart eingerichtet, dass sie nacheinander ihren Minimalbereich erreichen, wobei hierbei insbesondere ein Kontakt zur Einrückfeder aufgehoben sein kann. Somit verbleiben die Federzungentypen nach Erreichen ihres Minimalbereichs am Ende des Ausrückwegs in diesem Minimalbereich. Hierdurch wird ein sanfter Übergang in der Einrückfederkennlinie mit Mitteln erreicht, die sich leicht in die Fertigung konventioneller Federn einbinden lassen, wie zum Beispiel durch Stanzen einer Federstahlplatine.

Gemäß einer weiteren vorteilhaften Ausführungsform des Rücksystems weist das Rücksystem, einen Kraftverlauf über den Ausrückweg auf, der einem Kraftverlauf einer Übertotpunktfeder am Kupplungspedal im Zusammenspiel mit einer Einrückfeder entspricht.

Hierdurch wird insbesondere erreicht, dass der Benutzer dieses Rücksystems einen gewohnten Kraftverlauf am Kupplungspedal wahrnimmt und auf eine Übertotpunktfeder am Kupplungspedal verzichtet werden kann. Somit kann auf eine zusätzliche Federmittel verzichtet werden und zugleich die Einrückkräfte in der Kupplung angepasst an ein hohes Drehmoment zu einer verringerten Belastung der Reibbeläge führen, trotz hohem anliegenden Drehmoment.

Gemäß einem weiteren Aspekt der Erfindung wird auch eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit zumindest einer Anpressplatte und zumindest einer korrespondierenden Reibscheibe, über die im angepressten Zustand ein Drehmoment übertragbar ist; und
- zumindest ein Rücksystem gemäß der obigen Beschreibung.

Die Reibkupplung ist dazu vorgesehen, ein Drehmoment, insbesondere ein hohes Drehmoment, zu übertragen, wobei die Verbindung lösbar ist. Hierzu ist eine Rotationsachse vorgesehen, um die die Drehmoment übertragenden Komponenten rotierbar sind und entlang derer die Komponenten zumindest teilweise verschiebbar sind, so dass sie mittels des oben beschriebenen Rücksystems gegeneinander verpressbar sind, aber auch voneinander beabstandet werden können, so dass in diesem Zustand ein Drehmoment nicht übertragen werden kann.

Gemäß einer weiteren vorteilhaften Ausführungsform der Reibkupplung ist weiterhin zumindest ein verschleißbarer Reibbelag zwischen der Anpressplatte und der zumindest einen korrespondierenden Reibscheibe angeordnet und die Reibkupplung umfasst weiterhin zumindest eine Betätigungseinrichtung zum Betätigen des zumindest einen Reibpakets mittels des Rücksystems, wobei die Betätigungseinrichtung zumindest eine Verschleißnachstelleinrichtung umfasst.

Die Betätigungseinrichtung ist zum Betätigen der Reibkupplung vorgesehen und umfasst das oben beschriebene Rücksystem, welches das Reibpaket einrückt, beziehungsweise ausrückt. Hierbei ist bei der Betätigungseinrichtung eine Verschleißnachstelleinrichtung vorgesehen, die bewirkt, dass das Rücksystem (im Wesentlichen) in einer gleichen Position bleibt, das heißt, der Beginn des Ausrückwegs und das Ende des Ausrückwegs über die Lebenszeit beziehungsweise über die Abnahme der Reibbelagdicke konstant bleibt. Hierdurch ergibt sich eine gute Einstellbarkeit der Kompensationsfeder.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung umfasst.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Mit einer Reibkupplung gemäß der obigen Beschreibung und einem entsprechenden Rücksystem ist es möglich, die Gesamtgröße der Reibkupplung gering zu halten und zugleich den Komfort für den Fahrer hoch zu halten, indem das hohe Drehmoment ohne Einfluss auf die Kupplungskraft und den Kupplungskraftverlauf bleibt beziehungsweise der Einfluss gering ist. Zudem wird neuer Raum gewonnen, wenn aufgrund der geeignet eingestellten überlagerten Federkennlinie auf eine Übertotpunktfeder am Kupplungspedal verzichtet werden kann.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: den Kraftverlauf über dem Ausrückweg,
- Fig. 2:: einen alternativen Kraftverlauf über dem Ausrückweg,
- Fig. 3:: ein erstes Rücksystem im Betriebspunkt,
- Fig. 4:: ein zweites Rücksystem im Betriebspunkt,
- Fig. 5:: ein erstes Rücksystem beim Ausrücken,
- Fig. 6:: ein zweites Rücksystem beim Ausrücken,
- Fig. 7:: ein erstes Rücksystem in ausgerückter Lage,
- Fig. 8:: ein zweites Rücksystem in ausgerückter Lage,
- Fig. 9:: eine Kompensationsfeder mit zwei verschiedenen Federzungentypen,
- Fig. 10:: eine Kompensationsfeder mit einem Federzungentyp,
- Fig. 11:: eine konventionelle Stützfeder,
- Fig. 12:: eine Stützfeder mit einstückig gebildeter Haltefeder,
- Fig. 13:: eine Reibkupplung mit Betätigungseinrichtung und Rücksystem,
- Fig. 14:: eine erste Ausführungsform des Rücksystems,
- Fig. 15:: eine zweite Ausführungsform des Rücksystems,
- Fig. 16:: eine dritte Ausführungsform des Rücksystems,
- Fig. 17:: eine vierte Ausführungsform des Rücksystems,
- Fig. 18:: eine fünfte Ausführungsform des Rücksystems,
- Fig. 19:: eine sechste Ausführungsform des Rücksystems,
- Fig. 20:: ein Kraftfahrzeug mit Reibkupplung.

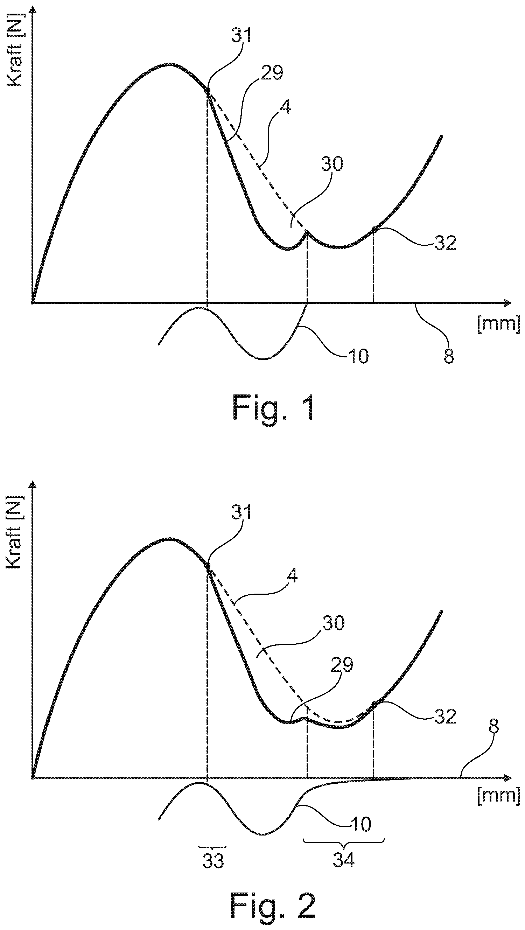

Fig. 1 zeigt einen Kraftverlauf über einen Ausrückweg 8, bei dem sich eine Einrückkraft 4 und eine Kompensationskraft 10 derart überlagern, dass sie zwischen einem Betriebspunkt 31 und einem vollständig ausgerückten Punkt 32 eine verändert überlagerte Kraft erzeugen, so dass Arbeit eingespart wird (30). Die Einrückkraft 4 wird im Betriebspunkt 31 nicht (wesentlich) verkleinert, während beim Ausrücken die Kompensationskraft 10 einen steileren Kraftverlauf bewirkt.

In Fig. 2 ist ein alternativer Kraftverlauf gezeigt, bei dem die Kompensationskraft am Ende des Ausrückwegs 34 einen sanfteren Verlauf aufweist als beim Beginn des Ausrückwegs 33, so dass eine überlagerte Kraft 29 entsteht, die für den Benutzer in gewohnter Weise aufgenommen wird, und insbesondere auf die konventionell übliche Verwendung einer Übertotpunktfeder beim Kupplungspedal verzichtet werden kann.

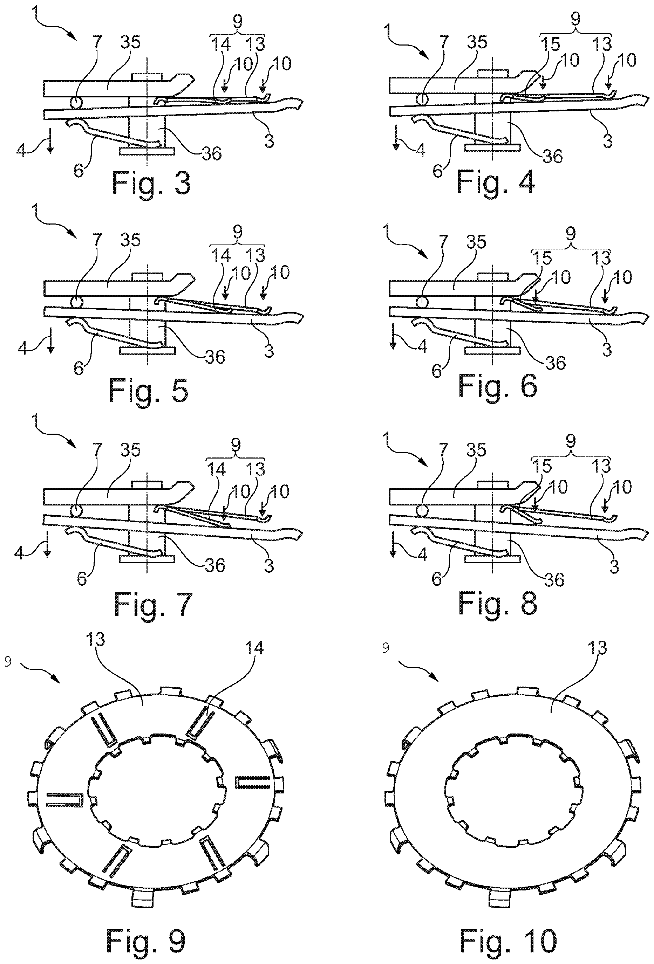

In den Fig. 3 bis 8 sind zwei verschiedene Konfigurationen einer Kompensationsfeder 9 mit verschiedenen Federzungentypen 13, 14, 15 gezeigt, wobei die Alternativen in den Figuren mit den ungeraden Zahlen und mit den geraden Zahlen auch verschiedene Schnitte durch ein und dieselbe Kompensationsfeder 9 sein können, wobei bei den ungeraden Zahlen neben einem ersten Federzungentyp 13 ein zweiter Federzungentyp 14 gezeigt ist und bei den Figuren mit den geraden Zahlen neben einem ersten Federzungentyp 13 ein dritter Federzungentyp 15 gezeigt ist. Das Rücksystem 1 in den Fig. 3 bis 8 umfasst dabei eine Einrückfeder 3, welche dazu eingerichtet ist, eine Einrückkraft 4 auf ein nicht dargestelltes Reibpaket 5 zu übertragen. Weiterhin ist eine Stützfeder 6 vorgesehen, die die Einrückfeder 3 an einer Hebelauflage 7 (hier als Drahtring ausgebildet) stützt, so dass die Einrückfeder 3 um die Hebelauflage 7 ausgelenkt wird. Die Stützfeder 6 ist auf einer Stützaufnahme 36 abgestützt, welche hier als Federbolzen gebildet ist, welcher mit dem Kupplungsdeckel 35 fest verbunden ist. Weiterhin ist eine Kompensationsfeder 9 vorgesehen, welche eine Kompensationskraft 10 auf die Einrückfeder 3 derart einleitet, dass sie der Einrückkraft 4 entgegenwirkt. In der Fig. 3 ist dabei ein erster Federzungentyp 13 und ein zweiter Federzungentyp 14 vorgesehen, welche sich durch ihre Länge, Anzahl und hierzu sehen im Krafteinleitungspunkt unterscheiden. In Fig. 4 ist eine ähnliche Anordnung, beziehungsweise ein anderer Schnitt durch dieselbe Kompensationsfeder 9, gezeigt, bei der ein dritter Federzungentyp 15 vorgesehen ist, welcher sich in ähnlicher Weise von dem ersten Federzungentyp 13 unterscheiden kann - hier kürzer ist als der zweite Federzungentyp 14 und damit eine andere Federkennlinie und einen anderen Krafteinleitungspunkt und gegebenenfalls einen anderen Zeitpunkt der Erreichung eines Minimalbereichs aufweist. In den Fig. 3 und 4 befindet sich die Einrückfeder 3 im Betriebspunkt, das heißt die Einrückkraft 4 sorgt für ein Anliegen der Reibpaketkomponenten (hier nicht gezeigt) aneinander, so dass ein Drehmoment übertragen wird. In den Fig. 5 und 6 befindet sich die Einrückfeder 3 in einem Zwischenzustand, in dem die Kompensationsfeder 9 gegen die Einrückkraft 4 anarbeitet und das Reibpaket 5 (nicht gezeigt) bereits gelöst ist. In den Fig. 7 und 8 ist die Einrückfeder 3 soweit ausgelenkt, dass das Reibpaket 5 vollständig gelöst ist, unter Umständen beabstandet, und hier einer der Federzungentypen 13, 14 und/oder 15 nicht mehr mit der Einrückfeder 3 im Eingriff stehen (hier der erste Federzungentyp 13). Hierdurch wird ein geeigneter Kraftverlauf erreicht, wie er zum Beispiel in Fig. 2 dargestellt ist.

In den Fig. 9 und 10 ist eine Kompensationsfeder 9 gezeigt, wobei in der Fig. 9 ein zweiter Federzungentyp 14 im Bereich des ersten Federzungentyps 13 vorgesehen ist. In Fig. 10 ist hingegen nur ein Federzungentyp 13 vorgesehen.

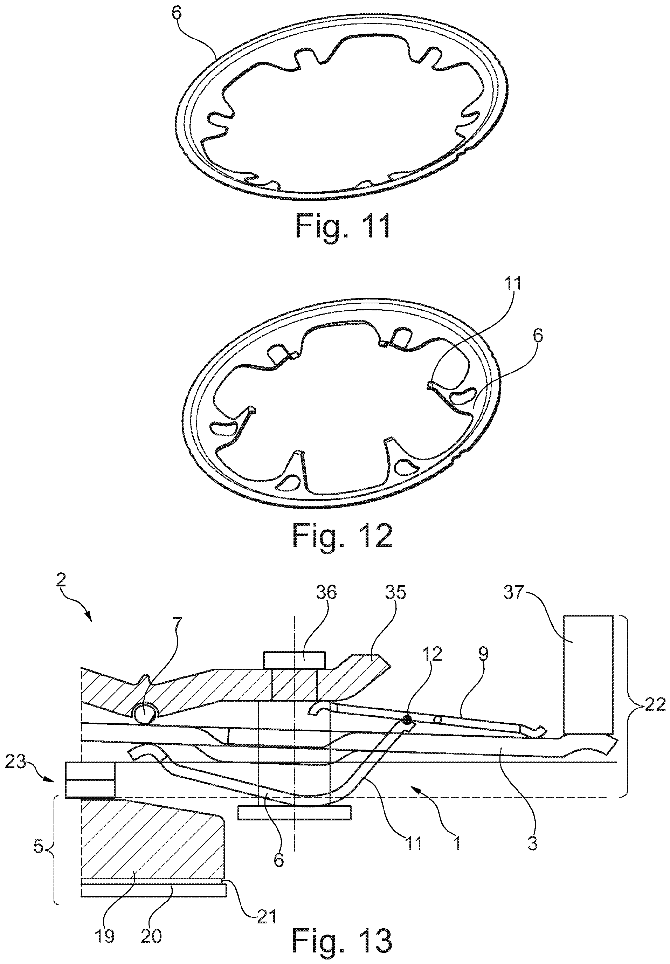

In Fig. 11 ist eine konventionelle Stützfeder 6 gezeigt, welche allein zwischen einer Stützaufnahme 36 (hier nicht dargestellt) und der Hebelauflage 7 (hier nicht dargestellt) stützt.

In Fig. 12 ist eine solche Stützfeder 6 derart abgeändert, dass weiterhin eine Haltefeder 11 vorgesehen ist, welche gegen die Kompensationsfeder 9 ab einem vorbestimmten Ausrückwegspunkt 12 (hier nicht gezeigt) anarbeitet.

In Fig. 13 ist eine solche Haltefeder 11 im Einbau in einer Reibkupplung 2 mit Betätigungseinrichtung 22 gezeigt, wobei die Konfiguration hier ähnlich ist wie in den Fig. 3 bis 8. Hierbei ist die Einrückfeder 3 in einem Zustand gezeigt, bei dem die Haltefeder 11 beim Ausrückwegspunkt 12 gegen die Kompensationsfeder 9 anarbeitet, um eine geeignete Federkennlinie, wie zum Beispiel in Fig. 2 dargestellt, zu erreichen. Ein Betätigungskolben 37 wirkt auf die Einrückfeder 3, so dass die Betätigungskraft, die über eine Verschleißnachstelleinrichtung 23 auf das Reibpaket 5 übertragen wird, gelöst wird. Das Reibpaket 5 besteht aus einer Anpressplatte 19 und einer korrespondierenden Reibscheibe 20 mit einem dazwischen angeordneten Reibbelag 21. Die Stützfeder 6 hält dabei die Einrückfeder 3 bei der Hebelauflage 7, welche hier als Drahtring dargestellt ist, und wird gestützt über die Stützaufnahme 36, welche hier wiederum als Federbolzen dargestellt ist, welcher fest mit einem Kupplungsdeckel verbunden ist. Das Rücksystem 1 bildet hierbei eine Komponente der Betätigungseinrichtung 22.

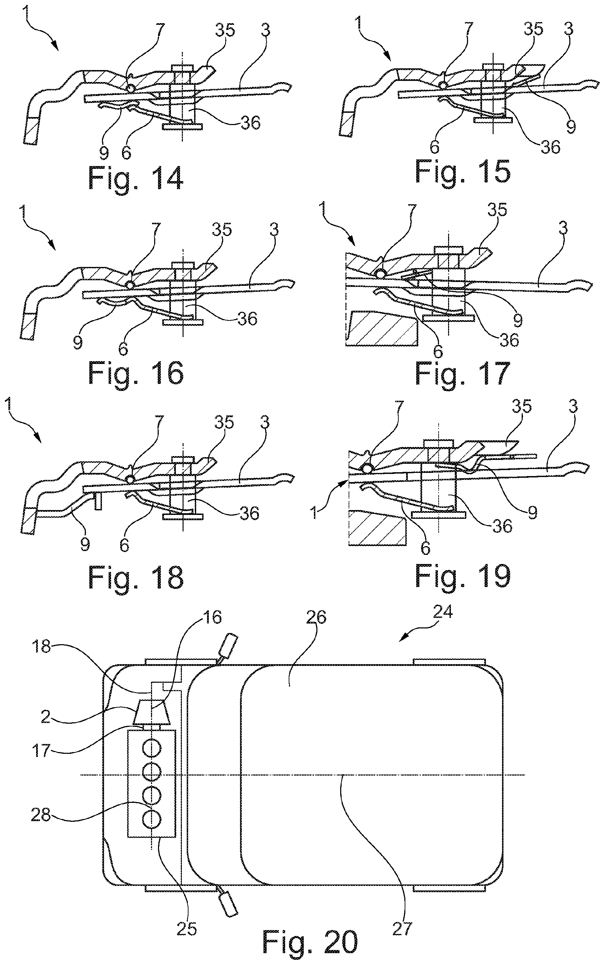

In den Fig. 14 bis 19 sind alternative Ausführungsformen des Rücksystems 1 gezeigt, wobei die Kompensationsfeder 9 an unterschiedlichen Stellen angeordnet ist. In Fig. 14 ist die Kompensationsfeder 9 zwischen der Stützfeder 6 und der Hebelauflage 7 angeordnet. In Fig. 15 ist die Kompensationsfeder 9 zwischen Kupplungsdeckel und der Einrückfeder 3 angeordnet. In Fig. 16 ist die Kompensationsfeder 9 einstückig mit der Stützfeder 6 gebildet. In Fig. 17 ist die Kompensationsfeder 9 zwischen dem Kupplungsdeckel 35 und der Einrückfeder 3 und zwischen der Hebelauflage 7 und der Stützaufnahme 36 angeordnet. In Fig. 18 ist die Kompensationsfeder 9 am Außenrand außerhalb der Verschleißnachstelleinrichtung 23 angeordnet. In Fig. 19 ist die Kompensationsfeder 9 zweifach am Kupplungsdeckel 35 abgestützt und erreicht hierdurch eine kombinierte Federkennlinie aus Verbiegung und Reibung mit dem Kupplungsdeckel 35.

In Fig. 20 ist ein Kraftfahrzeug 24 gezeigt, welches eine Antriebseinheit 25 aufweist, die hier als Verbrennungskraftmaschine dargestellt ist und mit ihrer Motorachse 28 quer zur Längsachse 27 des Kraftfahrzeugs 24 vor der Fahrerkabine 26 angeordnet ist. Mittels ihrer Abtriebswelle 17 ist die Antriebseinheit 25 lösbar über eine Reibkupplung 2 mit einem Antriebsstrang 18 verbindbar. Hierbei ist die Rotationsachse 16 der Reibkupplung 2 in Flucht mit der Motorachse 28 angeordnet.

Mit der hier vorgeschlagenen Kompensationsfeder kann eine geeignete Federkennlinie erreicht werden, welche den Komfort für den Benutzer erhöht und zugleich den Verschleiß an den Drehmoment übertragenden Komponenten reduzieren kann.

### Bezugszeichenliste

- 1: Rücksystem
- 2: Reibkupplung
- 3: Einrückfeder
- 4: Einrückkraft
- 5: Reibpaket
- 6: Stützfeder
- 7: Hebelauflage
- 8: Ausrückweg
- 9: Kompensationsfeder
- 10: Kompensationskraft
- 11: Haltefeder
- 12: Ausrückwegspunkt
- 13: erster Federzungentyp
- 14: zweiter Federzungentyp
- 15: dritter Federzungentyp
- 16: Rotationsachse
- 17: Abtriebswelle
- 18: Antriebsstrang
- 19: Anpressplatte
- 20: Reibscheibe
- 21: Reibbelag
- 22: Betätigungseinrichtung
- 23: Verschleißnachstelleinrichtung
- 24: Kraftfahrzeug
- 25: Antriebseinheit
- 26: Fahrerkabine
- 27: Längsachse
- 28: Motorachse
- 29: überlagerte Kraft
- 30: eingesparte Arbeit
- 31: Betriebspunkt
- 32: vollständig ausgerückter Punkt
- 33: Beginn des Ausrückwegs
- 34: Ende des Ausrückwegs
- 35: Kupplungsdeckel
- 36: Stützaufnahme
- 37: Betätigungskolben

## Patentansprüche

1. Rücksystem (1) für eine Reibkupplung (2) aufweisend zumindest die folgenden Komponenten:
- eine Einrückfeder (3) zum Erzeugen einer Einrückkraft (4) auf ein Reibpaket (5) einer Reibkupplung (2),
- eine Stützfeder (6) zum Stützen der Einrückfeder (3) an einer Hebelauflage (7), wobei die Einrückfeder (3) entlang eines Ausrückwegs (8) auslenkbar ist, und
- eine Kompensationsfeder (9), die eine der Einrückkraft (4) entgegen gerichtete Kompensationskraft (10) auf die Einrückfeder (3) ausübt, wobei die Kompensationsfeder (9) derart eingerichtet ist, dass die Kompensationskraft (10) am Beginn des Ausrückwegs (8) ansteigt, **dadurch gekennzeichnet, dass** weiterhin eine Haltefeder (11) vorgesehen ist, die derart eingerichtet ist, dass die Kompensationsfeder (9) ab einem vorbestimmten Ausrückwegspunkt (12) gegen die Haltefeder (11) wirkt und bei diesem Ausrückwegspunkt (12) die Kompensationskraft (10) auf die Einrückfeder (3) verringert ist.

2. Rücksystem (1) nach Anspruch 1, wobei die Haltefeder (11) einstückig mit der Stützfeder (6) gebildet ist.

3. Rücksystem (1) nach Anspruch 1 oder 2, wobei die Kompensationsfeder (9) eine Mehrzahl von Federzungentypen (13,14,15) aufweist, die sich in Steifigkeit und/oder Anzahl und/oder Krafteinleitungspunkt voneinander unterscheiden.

4. Rücksystem (1) nach Anspruch 3, wobei die Federzungentypen (13,14,15) derart eingerichtet sind, dass die Abnahme der Kompensationskraft (10) am Ende des Ausrückwegs (8) gegenüber der Zunahme am Beginn des Ausrückwegs (8) verzögert ist.

5. Rücksystem (1) nach Anspruch 3 oder 4, wobei die Federzungentypen (13,14,15) derart eingerichtet sind, dass die Federzungentypen (13,14,15) beim Ausrückwegsverlauf nacheinander einen Minimalbereich ihrer jeweiligen Kompensationskraftanteile erreichen und bis zum Ende des Ausrückwegs (8) beim Minimalbereich bleiben.

6. Rücksystem (1) nach einem der vorhergehenden Ansprüche, wobei das Rücksystem (1) einen Kraftverlauf über den Ausrückweg (8) aufweist, der einem Kraftverlauf einer Übertotpunktfeder am Kupplungspedal im Zusammenspiel mit einer Einrückfeder (3) entspricht.

7. Reibkupplung (2) mit einer Rotationsachse (16) zum lösbaren Verbinden einer Abtriebswelle (17) mit einem Antriebsstrang (18), aufweisend zumindest die folgenden Komponenten:
- zumindest ein Reibpaket (5) mit zumindest einer Anpressplatte (19) und zumindest einer korrespondierenden Reibscheibe (20), über die im angepressten Zustand ein Drehmoment übertragbar ist; und
- zumindest ein Rücksystem (1) nach einem der vorhergehenden Ansprüche.

8. Reibkupplung (2) nach Anspruch 7, wobei zumindest ein verschleißbarer Reibbelag (21) zwischen der Anpressplatte (19) und der zumindest einen korrespondierenden Reibscheibe (20) angeordnet ist und wobei die Reibkupplung (2) weiterhin zumindest eine Betätigungseinrichtung (22) zum Betätigen des zumindest einen Reibpakets (5) mittels des Rücksystems (1) umfasst, wobei die Betätigungseinrichtung (22) zumindest eine Verschleißnachstelleinrichtung (23) umfasst.

9. Kraftfahrzeug (24) aufweisend eine Antriebseinheit (25) mit einer Abtriebswelle (17), einen Antriebsstrang (18) und eine Reibkupplung (2) nach Anspruch 7 oder 8.

## Claims

1. Engaging/disengaging system (1) for a friction clutch (2) comprising at least the following components:
- an engaging spring (3) for generating an engaging force (4) on a friction assembly (5) of a friction clutch (2),
- a supporting spring (6) for supporting the engaging spring (3) on a lever support (7), it being possible for the engaging spring (3) to be deflected along a disengaging travel (8), and
- a compensating spring (9) which exerts a compensating force (10) which is directed counter to the engaging force (4) on the engaging spring (3), the compensating spring (9) being set up in such a way that the compensating force (10) rises at the beginning of the disengaging travel (8), **characterized in that**, furthermore, a retaining spring (11) is provided which is set up in such a way that the compensating spring (9) acts counter to the retaining spring (11) from a predefined disengaging travel point (12), and the compensating force (10) on the engaging spring (3) is reduced at the said disengaging travel point (12).

2. Engaging/disengaging system (1) according to Claim 1, the retaining spring (11) being formed in one piece with the supporting spring (6).

3. Engaging/disengaging system (1) according to Claim 1 or 2, the compensating spring (9) having a plurality of spring tongue types (13, 14, 15) which differ from one another in terms of stiffness and/or number and/or force application point.

4. Engaging/disengaging system (1) according to Claim 3, the spring tongue types (13, 14, 15) being set up in such a way that the decrease of the compensating force (10) at the end of the disengaging travel (8) is retarded in comparison with the increase at the beginning of the disengaging travel (8).

5. Engaging/disengaging system (1) according to Claim 3 or 4, the spring tongue types (13, 14, 15) being set up in such a way that, during the disengaging travel course, the spring tongue types (13, 14, 15) reach a minimum range of their respective compensating force components one after another and remain in the minimum range until the end of the disengaging travel (8).

6. Engaging/disengaging system (1) according to one of the preceding claims, the engaging/disengaging system (1) having a force progression over the disengaging travel (8), which force progression corresponds to a force progression of an over-dead-centre spring on the clutch pedal in combination with an engaging spring (3).

7. Friction clutch (2) having a rotational axis (16) for releasably connecting an output shaft (17) to a drive train (18), comprising at least the following components:
- at least one friction assembly (5) with at least one pressure plate (19) and at least one corresponding friction plate (20), via which a torque can be transmitted in the pressed-on state; and
- at least one engaging/disengaging system (1) according to one of the preceding claims.

8. Friction clutch (2) according to Claim 7, at least one wearable friction lining (21) being arranged between the pressure plate (19) and the at least one corresponding friction plate (20), and, furthermore, the friction clutch (2) comprising at least one actuating device (22) for actuating the at least one friction assembly (5) by means of the engaging/disengaging system (1), the actuating device (22) comprising at least one wear adjusting device (23).

9. Motor vehicle (24) comprising a drive unit (25) with an output shaft (17), and further comprising a drive train (18) and a friction clutch (2) according to Claim 7 or 8.

## Revendications

1. Système de commande (1) pour un embrayage à friction (2) comprenant au moins les composants suivants :
- un ressort d'embrayage (3) servant à produire une force d'embrayage (4) sur un groupe de friction (5) d'un embrayage à friction (2),
- un ressort d'appui (6) pour l'appui du ressort d'embrayage (3) sur un appui de levier (7), dans lequel le ressort d'embrayage (3) peut être dévié le long d'une course de débrayage (8), et
- un ressort de compensation (9) qui exerce sur le ressort d'embrayage (3) une force de compensation (10) dirigée en sens inverse de la force d'embrayage (4), dans lequel le ressort de compensation (9) est conçu de telle sorte que la force de compensation (10) augmente au début de la course de débrayage (8), **caractérisé en ce qu'**en outre un ressort de retenue (11) est prévu, lequel est conçu de telle sorte que le ressort de compensation (9) agit à l'encontre du ressort de retenue (11) à partir d'un point de course de débrayage (12) prédéfini et la force de compensation (10) sur le ressort d'embrayage (3) est réduite à ce point de course de débrayage (12).

2. Système de commande (1) selon la revendication 1, dans lequel le ressort de retenue (11) est formé d'un seul tenant avec le ressort d'appui (6).

3. Système de commande (1) selon la revendication 1 ou 2, dans lequel le ressort de compensation (9) comprend une pluralité de types de languettes élastiques (13, 14, 15) qui diffèrent les unes des autres en termes de rigidité et/ou de nombre et/ou de point d'application de force.

4. Système de commande (1) selon la revendication 3, dans lequel les types de languettes élastiques (13, 14, 15) sont conçus de telle sorte que la diminution de la force de compensation (10) à la fin de la course de débrayage (8) est retardée par rapport à l'augmentation au début de la course de débrayage (8).

5. Système de commande (1) selon la revendication 3 ou 4, dans lequel les types de languettes élastiques (13, 14, 15) sont conçus de telle sorte que les types de languettes élastiques (13, 14, 15) atteignent, dans le profil de course de débrayage, successivement une plage minimale de leurs parts de force de compensation respectives et demeurent dans la plage minimale jusqu'à la fin de la course de débrayage (8).

6. Système de commande (1) selon l'une des revendications précédentes, le système de commande (1) présentant un profil de force sur la course de débrayage (8) qui correspond à un profil de force d'un ressort de point mort haut au niveau de la pédale d'embrayage en coopération avec un ressort d'embrayage (3).

7. Embrayage à friction (2) présentant un axe de rotation (16) pour la liaison libérable d'un arbre de sortie (17) avec une chaîne cinématique (18), comprenant au moins les composants suivants :
- au moins un groupe de friction (5) comportant au moins un plateau de pression (19) et au moins un disque de friction correspondant (20) par le biais desquels un couple peut être transmis à l'état pressé ; et
- au moins un système de commande (1) selon l'une des revendications précédentes.

8. Embrayage à friction (2) selon la revendication 7, dans lequel au moins une garniture de friction (21) pouvant être usée est disposée entre le plateau de pression (19) et ledit au moins un disque de friction (20) correspondant, et l'embrayage à friction (2) comportant en outre au moins un dispositif d'actionnement (22) pour l'actionnement dudit au moins un groupe de friction (5) au moyen du système de commande (1), dans lequel le dispositif d'actionnement (22) comporte au moins un dispositif de rattrapage d'usure (23).

9. Véhicule automobile (24) comprenant une unité d'entraînement (25) dotée d'un arbre de sortie (17), une chaîne cinématique (18) et un embrayage à friction (2) selon la revendication 7 ou 8.
